Europäisches Patentamt

(19) European Patent Office

Office européen des brevets

(11) Veröffentlichungsnummer: **0 175 808**

**A1**

# (12) EUROPÄISCHE PATENTANMELDUNG

(21) Anmeldenummer: **84111527.2**

(22) Anmeldetag: **27.09.84**

(51) Int. Cl.⁴: **F 16 L 33/02**

(43) Veröffentlichungstag der Anmeldung:
**02.04.86  Patentblatt 86/14**

(84) Benannte Vertragsstaaten:
**AT BE CH FR GB IT LI NL SE**

(71) Anmelder: **Schulte, Wolfgang**
**Am Wendelpfad 9**
**D-5880 Lüdenscheid(DE)**

(72) Erfinder: **Schulte, Wolfgang**
**Am Wendelpfad 9**
**D-5880 Lüdenscheid(DE)**

(74) Vertreter: **Hassler, Werner, Dr.**
**Postfach 17 04 Asenberg 62**
**D-5880 Lüdenscheid(DE)**

(54) **Klemmschelle.**

㊗ Eine Klemmschelle für einen Schlauch auf einer Rohrtülle mit einem den Schlauch umgreifenden Ringsegment und mit Rastzähnen. Das technische-Problem der Erfindung ist eine solche Ausbildung der Klemmschelle, daß die Rastvorrichtung im wesentlichen unabhängig von den Ringsegmenten ist und ohne Schwierigkeiten und mit geringem Kraftaufwand spannbar ist. Ein Viereckrahmen (1) bildet mit einem Eckenbereich (2) einen feststehenden Abschnitt (3) des Ringsegmentes (16). An den feststehenden Abschnitt (3) des Ringsegmentes schließt sich ein weiterer nachgiebiger Abschnitt (4) an, der von der dem Eckenbereich benachbarten Schmalseite (5) des Viereckrahmens (1) ausgeht und einen Betätigungsschenkel (9) trägt. Der Betätigungsschenkel (9) reicht quer über die Fläche des Viereckrahmens (1) und ist gegen die gegenüberliegende Schmalseite (8) gerichtet. Die Schmalseite (8) ist in der Anzugrichtung des Betätigungsschenkels (9) gegen die Schmalseite (4) geneigt. In der Schmalseite (8) des Viereckrahmens (1) befindet sich ein Verzahnungsabschnitt (12). Die Stirnfläche des Betätigungsschenkels (9) weist ebenfalls einen Verzahnungsabschnitt (11) auf.

Fig.1

EP 0 175 808 A1

Anmelder: Schulte, Wolfgang

Am Wendelpfad 9

D-5880 Lüdenscheid (DE)

Klemmschelle

Beschreibung

Die Erfindung betrifft eine Klemmschelle für einen Schlauch auf einer Rohrtülle mit einem den Schlauch umgreifenden Ringsegment und mit Rastzähnen.

Die DE-AS 19 57 099 beschreibt eine Klemmschelle der genannten Art, bei der an dem Ringsegment zangenartig offene Schenkel sitzen, die mit Rastzähnen ineinandergreifen. Da die Schenkel im wesentlichen lose sind, ist es schwierig, einen sicheren Eingriff der Verzahnungen zu gewährleisten. Zum Lösen des Eingriffs müssen die Schenkel voneinander abgehoben oder in axialer Richtung gegeneinander verschoben werden. Hierzu sind jeweils erhebliche Verformungen und Verkantungen erforderlich, so daß eine Wiederverwendbarkeit der Klemmschelle nicht sichergestellt ist. Außerdem kann bei der Montage die Klemmschelle von dem Schlauch abgleiten, solange die Schenkel nicht zusammengedrückt und die Rastzähne miteinander in Eingriff sind.

Das DE-GM 81 10 397 beschreibt eine ähnliche Klemmschelle, bei der über den Verzahnungen ein zusätzlicher Halteschenkel angeordnet ist. Beim Spannen dieser Klemmschelle wird der Halteschenkel verformt, wenn die Verzahnungen übereinandergleiten. Auch zum Lösen der Klemmschelle ist eine erhebliche Verformung des Halteschenkels notwendig, so daß eine Wiederverwendung dieser Klemmschelle nicht möglich ist. Bei dieser sowie bei der zuvor beschriebenen Klemmschelle greifen die Verzahnungen beim Anlegen der Ringsegemente an den Schlauch ineinander. Wenn die Klemmschelle auf den Schlauch aufgebracht ist und die Verzahnungen formschlüssig ineinandersitzen, kann über die Verzahnungen keine zusätzliche Spannkraft aufgebracht werden.

Aufgabe der Erfindung ist eine solche Ausbildung der Klemmschelle, daß die Rastvorrichtung im wesentlichen unabhängig von den Ringsegmenten ist und ohne Schwierigkeiten und mit geringem Kraftaufwand spannbar ist. Die Klemmschelle soll auch mehrfach verwendbar sein.

Diese Aufgabe wird nach der Erfindung durch folgende Merkmale gelöst:

a) ein Viereckrahmen bildet mit einem Eckenbereich einen feststehenden Abschnitt des Ringsegmentes;

b) an den feststehenden Abschnitt des Ringsegmentes schließt sich ein weiterer nachgiebiger Abschnitt an, der von der dem Eckenbereich benachbarten Schmalseite des Viereckrahmens ausgeht und einen Betätigungsschenkel trägt;

c) der Betätigungsschenkel reicht quer über die Fläche des Viereckrahmens und ist gegen die gegenüberliegende Schmalseite gerichtet;

d) die Schmalseite ist in der Anzugrichtung des Betätigungsschenkels gegen die Schmalseite geneigt;

e) in der Schmalseite des Viereckrahmens befindet sich ein Verzahnungsabschnitt;

f) die Stirnfläche des Betätigungsschenkels weist ebenfalls einen Verzahnungsabschnitt auf.

Die Erfindung unterscheidet sich durch den einfachen Aufbau der Klemmschelle in nicht naheliegender Weise vom Stand der Technik. Der Betätigungsschenkel läßt sich mit einem klingenartigen oder zangenartigen Werkzeug betätigen. Die Klemmung ist infolge des nachgiebigen Ringsegments außerordentlich gut, da das nachgiebige Ringsegment über einen großen Umfangsbogen anliegt. Der Betätigungsschenkel kann nach dem Anliegen des Ringsegments an dem Schlauch weitergespannt werden, so daß eine zusätzliche Spannkraft bereitgestellt wird. Ein Druckstoß in radialer Richtung kann den Eingriff der Verzahnungen nicht beeinträchtigen. Die Klemmschelle ist ein einstückiges Thermoplastspritzgießteil, das sich leicht und genau herstellen läßt. Beim Aufschieben umgreift der Viereckrahmen den Schlauch, so daß die Schelle auch in ungespanntem Zustand nicht von dem Schlauch abgleiten kann. Mann kann also die Klemmschelle mit einer Hand aufschieben.

In Weiterbildung sieht die Erfindung vor, daß die Längsseiten des Viereckrahmens etwa parallel zueinander verlaufen und nachgiebig ausgebildet sind. Dadurch wird ein einwandfreies Lösen der Klemmschelle sichergestellt. Denn durch Zusammendrücken der nachgiebigen Längsseiten wird die Schmalseite mit dem Verzahnungsabschnitt aufgewölbt, so daß sich der Verzahnungsabschnitt des Betätigungsschenkels löst. Die Klemmschelle nach der Erfindung läßt sich also jederzeit lösen.

Dadurch wird die Verzahnung nicht beeinträchtigt, so daß die Klemmschelle mehrfach verwendbar ist. Das Lösen der Klemmschelle erfolgt durch einen zwangsweisen Eingriff auf den Viereckrahmen. Ein radialer Druck vom Innern des Schlauches kann die Verzahnung nicht lösen. Auch ein unbeabsichtiges Lösen kann kaum auftreten, da der Viereckrahmen ungerichtete Kräfte ohne weiteres aufnehmen kann. Im Einbauzustand ist die Klemmschelle auch nicht frei zugänglich.

In Weiterbildung der Erfindung ist vorgesehen, daß die Breite des Viereckrahmens mindestens dem Schlauchdurchmesser gleich ist. Hierdurch wird der Viereckrahmen in axialer Richtung stabilisiert, so daß Verwindungen oder Verkantungen des Ringsegments oder des Betätigungsschenkels nicht möglich sind.

Zur genauen Einstellung der Spannkraft ist vorgesehen, daß durch die Längsseite des Viereckrahmens eine Einstellschraube reicht, die in Betätigungsrichtung des Betätigungsschenkels schraubbar ist. Dadurch läßt sich die Spannkraft genau auf den gewünschten Sollwert einstellen.

Eine Ausführungsform der Erfindung wird im folgenden unter Bezugnahme auf die anliegende Zeichnung erläutert, in der darstellen:

Fig. 1 einen Querschnitt durch eine Klemmschelle in nichtgespanntem Zustand,

Fig. 2 die Klemmschelle in gespanntem Zustand,

Fig. 3 eine Umklappung zu Fig. 2 und

Fig. 4 eine abgewandlte Aufführungsform.

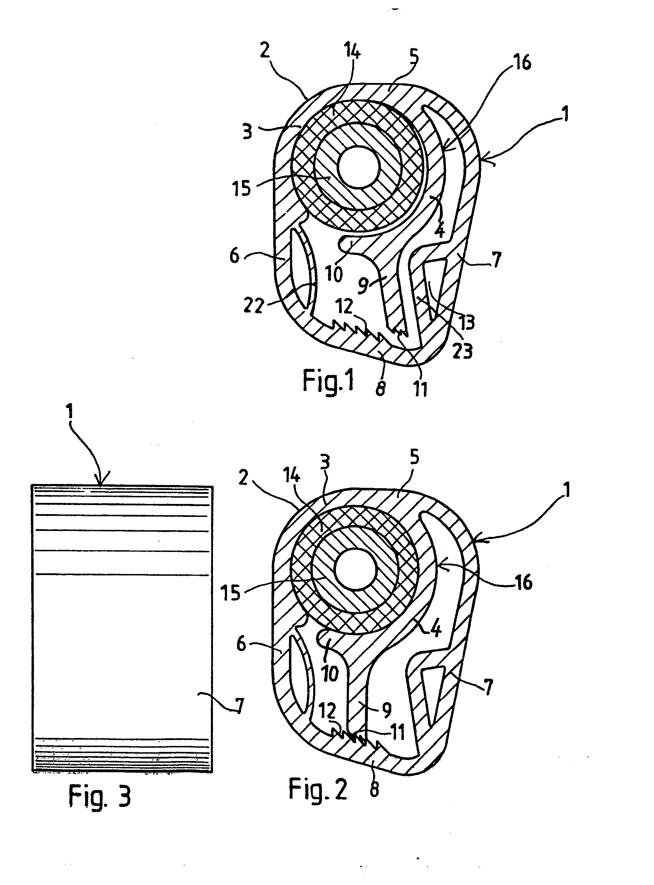

Die Klemmschelle nach der Erfindung ist ein Spritzgießteil aus einem thermoplastischen Kunststoff. Die Fig. 1 und 2 stellen jeweils Querschnitte dar. Senkrecht zur Zeichenebene hat die Klemmschelle nach Fig. 3 eine Abmessung, die mindestens dem Schlauchdurchmesser gleich ist. Der Querschnitt senkrecht zur Zeichenebene bleibt immer gleich. Damit ist die Klemmschelle gegen Verwindungen in axialer Richtung ausgesteift.

Die dargestellte Klemmschelle umfaßt einen Viereckrahmen 1, der einem Rechteck angeglichen ist. Im Bereich einer Ecke 2 ist ein Abschnitt 3 eines Ringsegments 16 ausgebildet, der in Bezug auf den Viereckrahmen 1 und den zu spannenden Schlauch 14 festliegt und an den sich ein nachgiebiger Abschnitt 4 anschließt, der sich aus der Schmalseite 5 des Viereckrahmens 1 heraus ringsegmentartig ins Innere des Vierecks erstreckt. An die Schmalseite 5 schließen sich zwei Längsseiten 6 und 7 des Viereckrahmens 1 an, die etwa parallel oder leicht gegeneinander geneigt verlaufen. Die Längsseiten 7 sind durch die weitere Schmalseite 8 miteinander verbunden, die geneigt zu der Schmalseite 5 und zwar in Richtung der Ecke 2 verläuft. An den Längsseiten 6 und 7 und in den Eckenbereichen kann man Versteifungsstege 22 und 23 vorsehen.

An dem Abschnitt 4 des Ringsegments 16 sitzt ein Betätigungsschenkel 9, der sich quer über die Fläche des Viereckrahmens 1 erstreckt und in entspanntem Zustand nach Fig. 1 nahezu bis zur Schmalseite 8 reicht. Der Abschnitt 4 ist über den Betätigungsschenkel 9 hinaus in ein Endstück 10 verlängert. Am Ende des Betätigungsschenkels 9 ist ein Verzahnungsabschnitt 11 vorgesehen. Auch die Schmalseite 8 weist einen Verzahnungsabschnitt 12 auf, der ebenfalls in der beschriebenen Weise geneigt zur Schmalseite 5 verläuft. Die Schmalseite 8 ist in Betätigungsrichtung des Betätigungsschenkels 9 geneigt, wobei die Betätigungsrichtung in Fig. 1 nach links gerichtet ist. In der Betätigungsrichtung des Betätigungsschenkels 9 wird der Abstand zu der Schmalseite 8 also kleiner.

Der Abschnitt 3, der Abschnitt 4 und das Endstück 10 bilden ein Ringsegment 16, das sich über einen wesentlichen Teil eines Vollkreises erstreckt. Die Verzahnungsabschnitte 11 und 12 sind in der Grundstellung nicht miteinander in Eingriff. Zwischen der Längsseite 7 und dem Betätigungsschenkel 10 bleibt ein Schlitz 13 frei, dessen Funktion noch erläutert wird.

Die Klemmschelle läßt sich auf einen entsprechenden Schlauch 14, der auf einer Rohrtülle 15 sitzt, aufschieben. Dieses ist mit einer Hand möglich. Die nichtklemmende Stellung des Ringsegments 16 ist in Fig. 1 dargestellt. Die Klemmschelle umgreift mit dem Viereckrahmen den Schlauch und kann infolgedessen nicht abfallen, auch wenn die Klemmschelle losgelassen wird. Man kann dann einen Schraubendreher oder ein anderes klingenartiges Werkzeug in den Schlitz 13 einschieben und den Betätigungsschenkel 9 nach links, bezogen auf Fig. 2, drücken, so daß sich der Abschnitt 4 des Ringsegments 16 an die Rohrtülle 15 anlegt. Auch mit einer Zange läßt sich der Betätigungsschenkel spannen. Der Betätigungsschenkel 9 greift in der Klemmstellung nach Fig. 2 mit seinem Verzahnungsabschnitt 1 in den Verzahnungsabschnitt 12 der Schmalseite 8 ein. Das Ringsegment 16 klemmt den Schlauch 14 auf der Rohrtülle 15 fest. Nachdem das Ringsegment 16 an dem Umfang des Schlauchs 14 anliegt, kann der Betätigungsschenkel 9 noch weitergespannt werden, so daß eine zusätzliche Spannkraft aufgebracht werden kann, nachdem das Ringsegment formschlüssig an dem Schlauch anliegt. Aufgrund der Konstruktion der Klemmschelle und des langen Hebelarms des Betätigungsschenkels läßt sich mit einer geringen Betätigungskraft eine hohe Spannwirkung sicherstellen. Infolge der großen Querabmessungen der Klemmschelle sind Verwindungen oder Verkantungen des Ringsegments 4 und des Betätigungsschenkels 9 ausgeschlossen. Dadurch ist immer ein sicherer Zahneingriff gewährleistet.

Ein stoßartiger Druck im Innern des Schlauches 14 in radialer Richtung kann offenbar nicht zu einer Lösung der Verzahnungen führen. Vielmehr werden die Verzahnungsabschnitte 11 und 12 durch einen Druck in radialer Richtung auf das Ringsegment 16 noch stärker miteinander in Eingriff gebracht.

Die Klemmschelle läßt sich jedoch dadurch wieder leicht lösen, indem durch Druck auf die Längsseiten 6 und 7 dieselben gegeneinander gedrückt werden, so daß die Schmalseite 8 leicht aufgewölbt wird und dadurch die Verzahnungsabschnitte voneinander freikommen. Bei diesem Lösen werden die Verzahnungsabschnitte 11 und 12 nicht belastet. Infolgedessen ist die Klemmschelle nicht beeinträchtigt, so daß sie wieder verwendet werden kann.

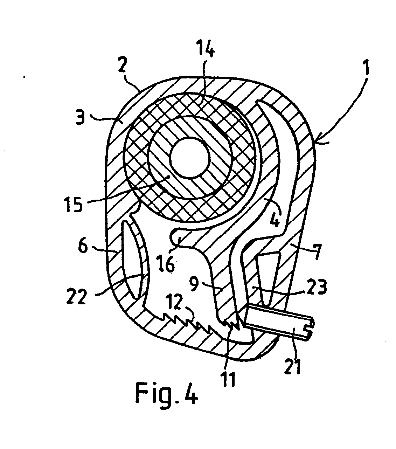

Bei der Ausführungsform nach Fig. 4 durchgreift eine Stellschraube 21 die Längsseite 7. Diese Stellschraube 21 erlaubt eine genaue Einstellung des Betätigungsschenkels 9, damit die Spannkraft eingestellt und nachgestellt werden kann. Es ist eine sehr feinfühlige Festspannung möglich.

Anmelder: Schulte, Wolfgang

Am Wendelpfad 9

D-5880 Lüdenscheid (DE)

Klemmschelle

Ansprüche

1. Klemmschelle für einen Schlauch auf einer Rohrtülle mit einem den Schlauch umgreifenden Ringsegment und mit Rastzähnen, gekennzeichnet durch folgende Merkmale:

a) ein Viereckrahmen (1) bildet mit einem Eckenbereich (2) einen feststehenden Abschnitt (3) des Ringsegmentes (16);

b) an den feststehenden Abschnitt (3) des Ringsegmentes schließt sich ein weiterer nachgiebiger Abschnitt (4) an, der von der dem Eckenbereich benachbarten Schmalseite (5) des Viereckrahmens (1) ausgeht und einen Betätigungsschenkel (9) trägt;

c) der Betätigungsschenkel (9) reicht quer über die Fläche des Viereckrahmens (1) und ist gegen die gegenüberliegende Schmalseite (8) gerichtet;

d) die Schmalseite (8) ist in der Anzugrichtung des Betätigungsschenkels (9) gegen die Schmalseite (4) geneigt;

e) in der Schmalseite (8) des Viereckrahmens (1) befindet sich ein Verzahnungsabschnitt (12);

f) die Stirnfläche des Betätigungsschenkels (9) weist ebenfalls einen Verzahnungsabschnitt (11) auf.

2. Klemmschelle nach Anspruch 1, dadurch gekennzeichnet, daß die Längsseiten (6 und 7) des Viereckrahmens (1) etwa parallel zueinander verlaufen und nachgiebig ausgebildet sind.

3. Klemmschelle nach Anspruch 1 oder 2, dadurch gekennzeichnet, daß die Breite des Viereckrahmens (1) mindestens dem Schlauchdurchmesser gleich ist.

4. Klemmschelle nach einem der Ansprüche 1 bis 3, dadurch gekennzeichnet, daß durch die Längsseite (7) des Viereckrahmens (1) eine Einstellschraube (21) reicht, die in Betätigungsrichtung des Betätigungsschenkels (9) schraubbar ist.

Fig.1

Fig. 3

Fig. 2

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE-A-3 010 424 (ZEIDLER)<br><br>* Figuren *<br><br>--- | | F 16 L 33/02 |
| A | DE-A-2 108 768 (BONTE)<br><br>--- | | |
| A | US-A-1 694 664 (PARKER)<br><br>----- | | |

**RECHERCHIERTE SACHGEBIETE (Int. Cl.4)**

F 16 L

Der vorliegende Recherchenbericht wurde für alle Patentansprüche erstellt.

| Recherchenort<br>DEN HAAG | Abschlußdatum der Recherche<br>07-06-1985 | Prüfer<br>HUBEAU M.G. |
|---|---|---|